# EUROPÄISCHE PATENTANMELDUNG

(11) **EP 4 496 160 A1**
(43) Veröffentlichungstag der Anmeldung: **22.01.2025**
(21) Anmeldenummer: 23185948.9
(22) Anmeldetag: 17.07.2023
(51) Int. Cl.: H02H 7/26, H02H 7/28, H02J 3/38, H02H 1/00

(54) **STROMNETZ MIT ABSICHERUNG**

(71) Anmelder: Murrelektronik GmbH, 71570 Oppenweiler (DE)
(72) Erfinder: WOLFF, Ingo, 71570 Oppenweiler (DE)
(74) Vertreter: Prinz & Partner mbB

(57) **Zusammenfassung**

Die Erfindung betrifft ein Stromnetz (10) für ein dezentrales Energiesystem, umfassend zumindest ein Stromverteilsystem (12) mit zumindest zwei Einspeisepunkten (18), zumindest eine Stromerfassungsvorrichtung (20), und zumindest eine Stromregulierungsvorrichtung (22), wobei die Stromerfassungsvorrichtung (20) dazu ausgebildet und eingerichtet ist, an den Einspeisepunkten (18) jeweils in das Stromverteilsystem (12) in unterschiedliche Richtungen fließende Ströme zu erfassen und wobei die Stromregulierungsvorrichtung (22) dazu ausgebildet und eingerichtet ist, Ströme im Stromverteilsystem (12) zu regulieren, wenn zumindest einer der von der Stromerfassungsvorrichtung (20) erfassten Ströme einen vorgegebenen Schwellenwert übersteigt.

## Beschreibung

Die Erfindung betrifft ein Stromnetz für ein dezentrales Energiesystem mit einer Absicherung.

Traditionelle Versorgungsnetze weisen typischerweise verschiedene Ebenen auf, beispielsweise eine Höchstspannungsebene, eine Hoch- und/oder Mittelspannungsebene, sowie eine Niederspannungsebene. Die Richtung des Energieflusses zwischen den Ebenen ist häufig unidirektional von hoch nach niedrig.

Der Energiefluss geht typischerweise von Kraftwerken aus über die einzelnen Ebenen bis hin zu den Verbrauchern. Die Netze stellen somit eine Baumstruktur dar. Die Baumstruktur kann sich auch bei den Endverbrauchern fortsetzen, beispielsweise in Form von sogenannten Micro-Grids.

So gibt es bei klassischen Industriebetrieben aber auch bei Haushalten häufig eine zentrale Einspeisung aus dem übergeordneten Netz sowie eine Mehrzahl an Verbrauchern und gegebenenfalls auch weitere Erzeuger, z.B. Photovoltaikanlagen, die alle miteinander verbunden sind. Die eingespeiste Energie wird auf die Verbraucher aufgeteilt.

Abgesichert wird typischerweise an der Einspeisung, wobei es bei der Höhe der Absicherung auf die Dimensionierung des Systems und die Energieverteilung ankommt. Die Abgänge wiederum werden auf ihre Stromtragfähigkeit hin abgesichert.

Bei der Dimensionierung des gesamten Systems werden zudem Anforderungen an die Selektivität gestellt. Bei einer vollständigen Selektivität ist gewährleistet, dass bei einem Fehler im Stromkreis bei in Reihe geschalteten Sicherungen nur jene auslöst, die sich unmittelbar vor der Fehlerstelle befindet. Dies erhöht die Versorgungssicherheit.

Sind beispielsweise zwei in Reihe geschaltete Schmelzsicherungen gegeben, liegt eine vollständige Selektivität dann vor, wenn die vorhergehende Sicherung mindestens um den Faktor 1,6 größer ist als die nachfolgende.

Diese Art der Absicherung wird beispielsweise bei Hausanschlüssen eingesetzt. In der Verteilkabine, in denen die Hausanschlussleitungen ankommen, werden diese mit 100 Ampere (A) abgesichert, wenn das Haus mit 63 A abgesichert wird. Hierdurch ist sichergestellt, dass zuerst die Sicherung im Hausanschluss auslöst, bevor die Sicherung in der Verteilkabine auslöst.

Gerade bei Systemen mit vielen Ab- und Zuleitungen ist es jedoch schwierig, eine vollständige Selektivität zu gewährleisten, da hierfür einzelne Netzbereiche bzw. Sicherungen sehr groß dimensioniert werden müssten. Infolgedessen müssen auch die verwendeten Leitungen entsprechend der Sicherung dimensioniert werden. Eine Auslegung der Abgänge mit vollständiger Selektivität hätte eine Überdimensionierung des Systems im Normalbetrieb zur Folge.

Daher werden viele Netze häufig auch nur teilselektiv ausgelegt. Dies bedeutet, dass nicht das gesamte Netz vollständig selektiv ausgelegt ist, sondern dass Selektivität nur für einen Teil der möglichen Fehlerfälle erreicht wird.

Beispielsweise können bei einem mit 63 A abgesicherten Hausanschluss von einer Hauptsicherung mehrere Stränge abführen. Bei drei Strängen, die jeweils mit 10 A abgesichert sind, liegt vollständige Selektivität vor (unter der Annahme, dass es sich bei allen Sicherungen jeweils um Schmelzsicherungen der gleichen Betriebsklasse handelt). Gehen dagegen vier Stränge ab, die mit jeweils 10 A abgesichert sind, liegt keine vollständige Selektivität mehr vor, da die Summe der einzelnen Ströme, die maximal über die einzelnen Stränge laufen können, multipliziert mit dem Faktor 1,6 einen Wert ergibt, der größer als 63 A ist.

Bei einem solchen System ist es zwar sehr wahrscheinlich, aber nicht sicher, dass nur die nachgelagerte Sicherung, welche der Fehlerquelle am nächsten ist, im Fehlerfall auslöst. Die Auslegung bei dieser Art der Teilselektivität basiert auf der statistischen Annahme, dass die Summe der tatsächlichen Ströme in den einzelnen Strängen so gering ist, dass ein Fehler in einem Strang nicht zum Auslösen der vorgeschalteten Sicherung führt.

Gerade in Netzen mit einer Vielzahl von Abgängen ist eine solche teilselektive Auslegung sinnvoll, denn eine vollselektive Auslegung würde eine extreme Überdimensionierung der Leitungen im Normalbetrieb zur Folge haben.

Dies hat jedoch zur Folge, dass es zu einer Überlastung einzelner Netzbereiche kommen kann. Ein solcher Fall kann insbesondere dann eintreten, wenn an mehreren Punkten zusätzlich in das Netz eingespeist wird (beispielsweise über Photovoltaikanlagen) und die zu- sowie abgeführten Energiemengen starken Schwankungen unterliegen.

Liegt beispielsweise ein Netz mit mehreren Abnehmern vor, das von einem übergeordneten Netz über einen ersten abgesicherten Einspeisepunkt versorgt wird und das von einer Photovoltaikanlage über einen zweiten abgesicherten Einspeisepunkt versorgt wird, so kann es bei konventionellen Systemen in einzelnen Netzbereichen, die von beiden Einspeisepunkten gespeist werden, zu einer Überlastung kommen. Um dies sicher zu verhindern, muss der Netzbereich derart dimensioniert sein, dass er durch die Summe der Ströme, welche über den ersten Einspeisepunkt und den zweiten Einspeisepunkt maximal fließen können, nicht überlastet wird.

Insbesondere bei Unternehmen, welche in der Lage sind, sich zeitweise komplett selbst zu versorgen, kann es vorkommen, dass einzelne Netzbereiche im Extremfall auf eine Stromtragfähigkeit ausgelegt werden müssen, die dem Doppelten am Haupteinspeisepunkt abgesicherten Stromwert entspricht, um eine Überlastung sicher zu vermeiden.

In diesem Zusammenhang entstehen durch die rasante Entwicklung erneuerbarer Energien und die Dezentralisierung von Energieerzeugern und Verbrauchern neue Herausforderungen im Bereich der Netzabsicherung. So kommen regenerative Erzeuger und Speichertechnologien auf den verschiedenen Ebenen (Hoch-; Mittel-; und Niederspannungsebene) mit hinzu. Dadurch wird der Energietransport eines historisch unidirektional ausgelegten Netzes jetzt bidirektional.

Um die Netze nicht zu überlasten und die abgenommene Energie mit der erzeugten Energie in der Waage zu halten, werden oft aufwendige Steuerungen angewendet und/oder Regeln etabliert. Damit z.B. lokale Stromerzeuger die Netze nicht überlasten, dürfen Kleinerzeuger nur bestimmte Mengen Strom liefern. Größere Erzeuger, wie Windenergieanlagen, bzw. Erzeuger auf den anderen Ebenen werden über komplexe Energiemanagementsysteme gesteuert. Hierbei werden je nach Bedarf Erzeuger zu oder weggeschaltet, um den Bedarf zu decken und die Leitungen nicht zu überlasten.

In weiten Bereichen der Niederspannungsnetze und/oder bei den Endabnehmern ist eine hinreichende Regelung der einzelnen Erzeuger und Verbraucher jedoch aufgrund der Komplexität und des Aufwandes häufig unzweckmäßig. Die Überwachung des Stromflusses einzelner Stränge der Netze wird oft nur an einzelnen Punkten, insbesondere an den zentralen Einspeisepunkten, durchgeführt.

Vor allem bei den sich etablierenden Mico Grids, die in der Industrie verstärkt Einzug halten, führt dies zu Problemen, da es oft eine Vielzahl an unterschiedlichen Netzteilnehmern gibt, beispielsweise steuerbare sowie nicht steuerbare unidirektionale sowie bidirektionale Erzeuger und Verbraucher.

Gerade bei der Erweiterung derartiger Systeme oder bei erhöhtem Energiebedarf besteht deshalb eine Gefahr, dass es zu Überlastungen in Teilbereichen des Micro-Grids und infolgedessen zu Beschädigungen oder sogar Bränden kommt.

Die Aufgabe der Erfindung ist es daher, eine Möglichkeit zum Verteilen von Energie in einem Energiesystem bereitzustellen, bei welcher sichergestellt ist, dass es zu keiner Überlastung des Energiesystems bzw. Energieverteilsystems kommt.

Die Aufgabe wird erfindungsgemäß gelöst durch ein Stromnetz für ein dezentrales Energiesystem, beispielsweise für ein Micro-Grid. Das Stromnetz umfasst zumindest ein Stromverteilsystem (beispielsweise gebildet aus Stromschienen oder Stromkabeln) mit zumindest zwei Einspeisepunkten. Das Stromnetz umfasst ferner zumindest eine Stromerfassungsvorrichtung, und zumindest eine Stromregulierungsvorrichtung. Dabei ist die Stromerfassungsvorrichtung dazu ausgebildet und eingerichtet, an den Einspeisepunkten jeweils in das Stromverteilsystem in unterschiedliche Richtungen fließende Ströme zu erfassen. Die Stromregulierungsvorrichtung ist dazu ausgebildet und eingerichtet, Ströme im Stromverteilsystem zu regulieren, wenn zumindest einer der von der Stromerfassungsvorrichtung erfassten Ströme einen vorgegebenen Schwellenwert übersteigt.

Der Begriff "regulieren" schließt dabei verschiedene Möglichkeiten ein, den Stromfluss zu verändern, insbesondere auch durch Zuschalten, Abschalten und/oder Drosseln von Verbrauchern, Erzeugern, Speichern und/oder Teilen des Stromnetzes.

Dadurch, dass in unterschiedliche Richtungen fließende Ströme im Stromnetz erfassbar sind, wird die Kontrolle über einzelne Leitungsabschnitte des Energiesystems verbessert. Drohende Überlastungen können so schnell erkannt und Gegenmaßnahmen ergriffen werden. Durch die verbesserte Kontrolle kann auch eine ansonsten notwendige Überdimensionierung des Energiesystems auf ein Minimum reduziert werden.

In einer Ausführungsform der Erfindung ist die Stromerfassungsvorrichtung dazu ausgebildet und eingerichtet, Stromflüsse elektronisch und/oder anhand einer Erwärmung einer Komponente des Stromverteilsystems zu erfassen. Beispielsweise können Stromflüsse anhand der Erwärmung eines Sicherheitsdrahtes und/oder eines Bimetallstreifens und/oder von Strommesswiderständen (Shunts) und/oder anhand eines strominduzierten Magnetfeldes technisch einfach und mit hoher Präzision erfasst werden.

Auch die Messung der Temperatur an unterschiedlichen Stellen im Stromverteilsystem kann genutzt werden, um die Stromflüsse in verschiedene Richtungen zu bestimmen.

Bei der Stromerfassungsvorrichtung und der Stromregulierungsvorrichtung kann es sich auch um eine gemeinsame Vorrichtung handeln, beispielsweise um eine Sicherung. Es kann sich jedoch auch um verschiedene Vorrichtungen handeln.

Es ist denkbar, dass die Stromregulierungsvorrichtung dazu ausgebildet und eingerichtet ist, Ströme im Stromverteilsystem dadurch zu regulieren, dass eine Leistung eines mit einem Einspeisepunkt verbundenen Einspeisesystems geregelt wird. Alternativ kann das Einspeisesystem abgeschaltet und/oder das Einspeisesystem vom Einspeisepunkt getrennt werden. Dies kann beispielsweise durch Trennen oder Auslösen eines mechanischen oder elektromechanischen Schalters, einer Sicherung und/oder einer Schmelzsicherung erfolgen.

Dadurch kann eine Überlast und/oder drohende Überlast schnell und einfach verhindert werden, ohne dass Verbindungen innerhalb des Stromverteilsystems unterbrochen werden müssen. Eine solche Verbindungsunterbrechung kann beispielsweise dazu führen, dass es zu einer unerwünschten Umverteilung von Stromflüssen innerhalb des Stromverteilsystems kommt, was wiederum zu Überlastungen an anderen Stellen und letztlich zu einer Art Kettenreaktion führen kann.

Weiterhin kann vorgesehen sein, dass die Stromregulierungsvorrichtung dazu ausgebildet und eingerichtet ist, Ströme im Stromverteilsystem dadurch zu regulieren, dass das Stromverteilsystem in zumindest eine Richtung unterbrochen wird und/oder am Stromverteilsystem angeschlossene Verbraucher geregelt, abgeschaltet oder vom Stromverteilsystem getrennt werden. Hierdurch können Stromflüsse im Stromverteilsystem schnell und effektiv reguliert und/oder gezielt umverteilt werden.

Ein Beispiel für Verbraucher, deren Verbrauch zeitlich begrenzt reguliert werden kann, sind Kühlhäuser. Auch bei einer vorübergehenden Drosselung und/oder Abschaltung der Kühlung kann die Kühlfunktion aufrechterhalten werden.

Ein weiteres Beispiel sind Energiespeicher. Diese können beim Laden als Verbraucher und beim Entladen als Einspeisesystem fungieren. Sowohl das Laden als auch das Entladen kann zum Zwecke der Regulierung des Stromes im Stromverteilsystem gesteuert bzw. geregelt werden.

Es ist auch denkbar, dass die Stromregulierungsvorrichtung dazu ausgebildet und eingerichtet ist, Ströme im Stromverteilsystem nur dann durch ein Abschalten, Regeln und/oder Trennen von Verbrauchern zu regulieren, wenn ein Abschalten, Regeln und/oder Trennen eines oder mehrerer Versorger vom Stromverteilsystem nicht zur hinreichenden Regulierung der Ströme im Stromverteilsystem genügt.

Mit anderen Worten kann das Abschalten, Regeln und/oder Trennen von Verbrauchern nachrangig zum Abschalten, Regeln und/oder Trennen eines oder mehrerer Versorger erfolgen.

In einer bevorzugten Ausführungsvariante ist das Stromverteilsystem dazu ausgebildet und eingerichtet mit Gleichstrom betrieben zu werden. Das Stromnetz kann insbesondere Bestandteil eines DC-Micro-Grid sein. Gleichstromnetzte haben den Vorteil, dass die Energie vieler einzelner Erzeuger (beispielsweise Photovoltaikanlagen) ohne zwischengeschalteten Wechselrichter unmittelbar in das Stromverteilsystem eingespeist werden kann. Auf der anderen Seite können auch viele Verbraucher, die mit Gleichstrom arbeiten, unmittelbar, d.h. ohne zwischengeschalteten Gleichrichter, mit Strom aus dem DC-Micro-Grid betrieben werden. So werden Wandlungsverluste vermieden.

Denkbar ist auch, dass das Stromverteilsystem bzw. DC-Micro-Grid als Inselnetz betreibbar ist. Dadurch ist es von übergeordneten Versorgerebenen unabhängig, was die Versorgungssicherheit erhöht.

In einer weiteren Ausführungsform weist das Stromnetz zumindest zwei Stromerfassungs- und/oder Stromregulierungsvorrichtungen auf, die jeweils eine Kommunikationseinheit haben, über welche die Stromerfassungs- und/oder Stromregulierungsvorrichtungen miteinander kommunizieren können.

Dadurch können Informationen über Stromflüsse in unterschiedlichen Bereichen des Stromnetzes erfasst und ausgetauscht werden. Insbesondere erlaubt dies einen Rückschluss auf einen resultierenden Stromfluss in einem Bereich des Stromverteilsystems zwischen den kommunizierenden Stromerfassungs- und/oder Stromregulierungsvorrichtungen. So kann auch bei einer schlanken Auslegung des Stromverteilsystems sichergestellt werden, dass es zu keiner Überlastung kommt. Eine vollselektive Auslegung und/oder Überdimensionierung des Stromverteilsystems ist nicht erforderlich.

Auch bei Ausführungsformen mit kommunizierenden Stromregulierungsvorrichtungen kann der Strom durch ein Abschalten, Regeln und/oder Trennen eines oder mehrerer Versorger und/oder Verbraucher erfolgen.

Die Kommunikation kann lokal begrenzt, beispielsweise zwischen zwei benachbarten Einspeisepunkten, erfolgen und/oder global über sämtliche im Stromnetz verteilte Stromregulierungsvorrichtungen mit Kommunikationseinheit.

Es ist ferner denkbar, dass das Stromnetz eine künstliche Intelligenz (KI) umfasst. Insbesondere kann bei kommunizierenden bzw. vernetzten Stromregulierungsvorrichtungen die Stromregulierung mittels der (KI) erfolgen.

Die KI kann durch Maschinenlernen trainierbar sein.

Beispielsweise kann die KI dazu ausgebildet und eingerichtet sein, zu bewerten, wie stark sich das Abschalten Regeln und/oder Trennen eines oder mehrerer Versorger und/oder Verbraucher auf den Stromfluss im Stromverteilsystem oder einem Teilbereich davon auswirkt. So können Überlasten effektiv verhindert und die Versorgungssicherheit verbessert werden.

Das Stromverteilsystem kann auch mehrere Segmente umfassen, die jeweils durch Stromregulierungsvorrichtungen trennbar miteinander und/oder trennbar mit einem Einspeisesystem verbunden sind. Bei den Segmenten kann es sich insbesondere um Teile des Stromverteilsystems handeln, die Energie an einen oder mehrere Verbraucher verteilen.

Vorteilhaft an der segmentierten Ausführung ist, dass die einzelnen Segmente unterschiedlich, insbesondere bedarfsgerecht, dimensioniert sein können. Hiermit ist gemeint, dass die Stromtragfähigkeit des Stromverteilsystems an einigen Stellen, an denen typischerweise nur geringer Lasten auftreten, geringer sein kann als an anderen Stellen, an denen höhere Lasten zu erwarten sind.

Beispielsweise kann die Stromregulierungsvorrichtung auch dazu ausgebildet und eingerichtet sein, Segmente mit einer geringeren Stromtragfähigkeit vor anderen Segmenten mit einer höheren Stromtragfähigkeit vom Stromverteilsystem zu trennen bzw. den Stromfluss in diesen bevorzugt zu regulieren. So können schwächer dimensionierte Segmente effektiv vor einer Überlast und/oder Beschädigungen geschützt werden.

Die Verbindung zweier Segmente kann beispielsweise an einem Einspeisepunkt erfolgt, über den beide Segmente mit Strom versorgt sind. So kann der Stromfluss in die beiden Segmente einfach überwacht und/oder reguliert werden.

Generell ist zur Energieversorgung bzw. Einspeisung jedes der Segmente mit mindestens einem Einspeisesystem direkt oder indirekt über weitere Segmente verbunden.

Insbesondere kann auch vorgesehen sein, dass jedes Segment einen oder mehrere elektrischen Verbraucher aufweist und/oder dass jedem Segment zumindest ein Einspeisepunkt zugeordnet ist. Es kann auch vorgesehen sein, dass ein Segment von mindestens einer Seite (bevorzugt von zwei Seiten) eingespeist wird, wobei jede Einspeisung in das Segment jeweils mittels einer Stromerfassungsvorrichtung überwacht wird.

In einer bevorzugten Ausführungsform sind die Segmente des Stromverteilsystems derart ausgebildet bzw. angeordnet, dass in jedes Segment von maximal zwei Seiten eingespeist wird. Dies vereinfacht die Stromregulierung.

Insbesondere kann vorgesehen sein, dass jedes der Segmente mit maximal zwei Einspeisepunkten unmittelbar verbunden ist. Trotzdem kann eine Einspeisung in ein einzelnes Segment auch durch mehr als zwei Einspeisesysteme erfolgen, beispielsweise, wenn mehrere Einspeisesysteme über einen gemeinsamen Einspeisepunkt mit dem Segment verbunden sind.

In einer weiteren Ausführungsform des Stromnetzes sind mehrere Einspeisepunkte im Stromverteilsystem vorgesehen, die jeweils über eine zugeordnete Stromregulierungsvorrichtung abgesichert einspeisen. Es erfolgt also eine Absicherung an jedem einzelnen Einspeisepunkt. Dies erhöht die Sicherheit des Stromnetzes.

In einer weiteren Ausgestaltung sind mehrere elektrische Verbraucher im Stromverteilsystem vorgesehen. Von diesen ist jedoch nur eine Teilmenge über Stromregulierungsvorrichtungen mit dem Stromverteilsystem verbunden. Insbesondere kann vorgesehen sein, dass nur Großverbraucher bzw. kontinuierliche Verbraucher jeweils einzeln über eine Stromregulierungsvorrichtung an das Stromverteilsystem angebunden sind. Auf eine ressourcenintensive gesondert abgesicherte Anbindung jedes einzelnen Verbrauchers kann also verzichtet werden. Trotzdem kann mittels dieser Maßnahme die Gefahr von Überlast und/oder Blackouts im Stromnetz weiter reduziert werden.

Weiterhin kann vorgesehen sein, dass an dem zumindest einen Einspeisepunkt des Stromnetzes zwei oder mehr Einspeisesysteme angeschlossen sind. Die Einspeisesysteme können dabei über eine einzelne Stromregulierungsvorrichtung mit dem Einspeisepunkt verbunden sein. Dadurch können im Vergleich zu Systemen, bei denen jedes einzelne Einspeisesystem einzeln abgesichert ist, Ressourcen eingespart werden.

In einer weiteren bevorzugten Ausführungsvariante sind eines oder mehrere Segmente des Stromverteilsystems so dimensioniert, dass eine Summe von Abschaltströmen aller am entsprechenden Segment unmittelbar angebundenen Stromregulierungsvorrichtungen das Segment nicht überlastet. So können einzelne Segmente vor Überlast geschützt werden.

In einer weiteren Ausführungsvariante ist vorgesehen, dass zumindest ein Segment, zwei gegenüberliegende Segmentenden aufweist, die jeweils mit einem Einspeisepunkt verbunden sind, wobei das Segment ausschließlich über die beiden Segmentenden gespeist wird. An beiden Segmentenden befinden sich Stromregulierungsvorrichtungen (beispielsweise Sicherungen).

In dieser Ausführungsvariante kann vorgesehen sein, dass sowohl die Stromregulierungsvorrichtungen als auch das betreffende Segment selbst jeweils auf die maximale Stromtragfähigkeit des Stromverteilsystems ausgelegt sind. Beträgt die maximale Stromtragfähigkeit des Stromverteilsystems also beispielsweise 100 A, so sind die Stromregulierungsvorrichtungen ebenfalls auf diesen Wert ausgelegt (z.B. Sicherungen mit einem Abschaltstrom von 100 A).

Da ausschließlich über die Segmentenden eingespeist wird, kann die Stromtragfähigkeit des Segmentes nicht überschritten werden, obwohl das Segment nicht wie konventionell auf die Summe der Abschaltströme aller unmittelbar angebundenen Stromregulierungsvorrichtungen ausgelegt ist.

In einer weiteren Ausführungsform der Erfindung kann vorgesehen sein, dass alle Einspeisepunkte im Stromverteilsystem so angeordnet sind, dass Strom von den Einspeisepunkten jeweils in unterschiedliche Richtungen in das Stromverteilsystem fließen kann. Durch diese Anordnung wird der vom Einspeisepunkt kommende Stromfluss aufgeteilt und die Last auf die einzelnen Leitungen des Stromverteilsystems verringert sich. Dies kann beispielsweise dadurch erreicht werden, dass jeder der Einspeisepunkte des Stromnetzes zwischen zwei Segmenten angeordnet ist. So kann sich der über einen jeden Einspeisepunkt eingespeiste Strom auf die jeweils angrenzenden Segmente verteilen.

Weiterhin ist denkbar, dass das Stromverteilsystem als Ringstruktur ausgebildet ist. In Ringstrukturen teilt sich der Strom typischerweise an Einspeisepunkten in beide Richtungen annähernd gleichmäßig auf. Auf diese Weise verringert sich die Last auf einzelne Leitungsbereiche, bzw. bei einem segmentierten Aufbau der Strom in den einzelnen Segmenten. Insbesondere bei mehreren Einspeisungen entlang der Ringstruktur ergibt sich somit eine optimale Ausnutzung der Infrastruktur. Es kann eine Überdimensionierung des Stromverteilsystems vermieden und Material eingespart werden.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1 eine schematische Darstellung eines aus dem Stand der Technik bekannten Stromnetzes;
- Fig. 2 eine schematische Darstellung einer ersten Ausführungsform eines erfindungsgemäßen Stromnetzes mit Absicherungen an den Einspeisepunkten;
- Fig. 3 eine schematische Darstellung einer zweiten Ausführungsform eines erfindungsgemäßen Stromnetzes mit Strommesseinrichtungen zum Messen des Stromflusses von den Einspeisepunkten in angrenzende Segmente;
- Fig. 4 eine schematische Darstellung einer dritten Ausführungsform eines erfindungsgemäßen Stromnetzes mit Strommesseinrichtungen zum Messen des Stromflusses von den Einspeisepunkten in angrenzende Segmente sowie an einzelnen Abgängen mit Hauptverbrauchern;
- Fig. 5 eine schematische Darstellung einer vierten Ausführungsform eines erfindungsgemäßen Stromnetzes mit einem ringförmigen Stromverteilsystem; und
- Fig. 6 eine schematische Darstellung einer fünften Ausführungsform eines erfindungsgemäßen Stromnetzes mit mehreren aneinandergereihten Einspeisesystemen.

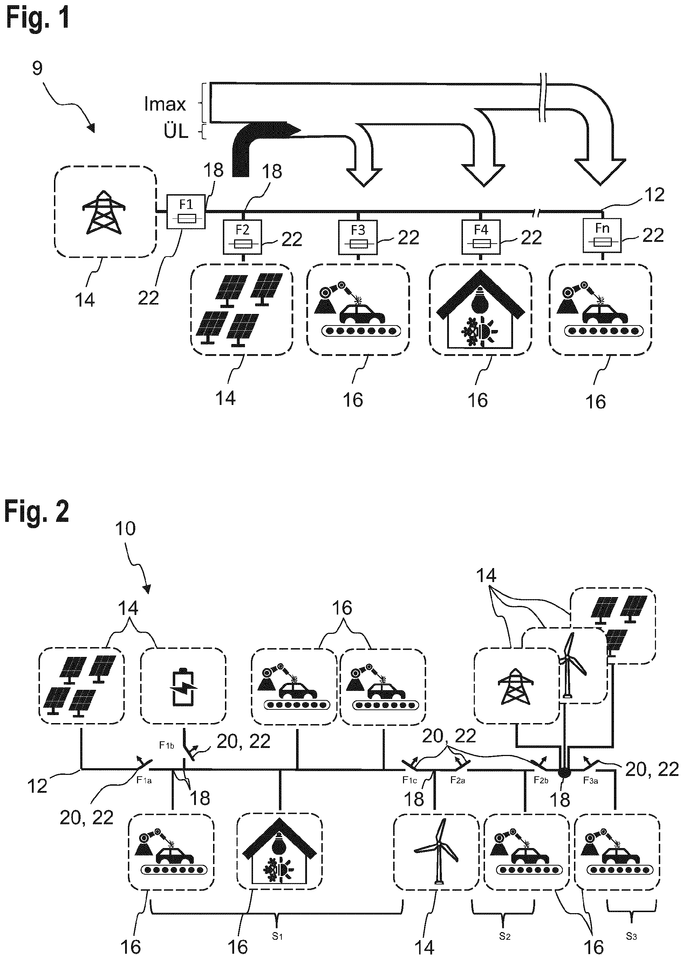

Figur 1 zeigt eine schematische Darstellung eines aus dem Stand der Technik bekannten konventionellen Stromnetzes 9.

Das konventionelle Stromnetz 9 umfasst ein Stromverteilsystem 12, das Stromkabel und/oder Stromschienen umfasst. Das Stromverteilsystem 12 verbindet an das konventionelle Stromnetz 9 angebundene Einspeisesysteme 14, vorliegend eine Photovoltaikanlage sowie ein übergeordnetes Netz, und Verbraucher 16, z.B. Gebäudetechnik oder Industrieanlagen, elektrisch miteinander.

Stellen, an welchen elektrische Energie von einem der Einspeisesysteme 14 in das konventionelle Stromnetz 9 gelangt, werden als Einspeisepunkte 18 bezeichnet.

Weiterhin weist das konventionelle Stromnetz 9 eine Mehrzahl von Stromregulierungsvorrichtungen 22 auf (im Beispiel Sicherungen F1, F2, F3, F4, - Fn).

In Figur 1 ist darüber hinaus der Nenn- oder Bemessungsstrom der Leitungen Imax symbolisiert, welcher der maximalen Stromtragfähigkeit des Stromverteilsystems 12 entspricht.

Im gezeigten konventionellen Stromnetz 9 entspricht der Nenn- oder Bemessungsstrom der Sicherung F1, über welche das übergeordnete Netz angebunden ist, dem Nenn- oder Bemessungsstrom der Leitungen Imax.

Bei dieser Auslegung des konventionellen Stromnetzes 9 kann es zu einer Überlast ÜL kommen, wenn zusätzlich eine Einspeisung über die Photovoltaikanlage erfolgt, welche über die Sicherung F2 am konventionellen Stromnetz 9 angebunden ist.

Um eine solche Überlast zu verhindern, werden Stromverteilsysteme 12 typischerweise so ausgelegt, dass ihre Stromtragfähigkeit der Summe der Nennoder Bemessungsströme all jener Sicherungen F1, F2 entspricht, über welche Einspeisesysteme 14 angebunden sind.

In Figur 2 ist eine erste Ausführungsform eines erfindungsgemäßen Stromnetzes 10 für ein Micro-Grid gezeigt.

Das Stromnetz 10 umfasst ein Stromverteilsystem 12, das insbesondere Stromkabel und/oder Stromschienen umfasst, welches an das Stromnetz 10 angebundene Einspeisesysteme 14, z.B. Photovoltaikanlagen, Windkraftanlagen oder Speicher, und Verbraucher 16, z.B. Gebäudetechnik oder Industrieanlagen, elektrisch miteinander verbindet.

Das Stromverteilsystem 12 ist dazu ausgebildet und eingerichtet, mit Gleichstrom betrieben zu werden. Es ist also ein Gleichstromnetz. Dadurch können Wandlungsverluste beim Einspeisen von Energie, beispielsweise von Photovoltaikanlagen und/oder Batteriespeichern, sowie bei der Energieentnahme durch Gleichstromverbraucher vermieden werden.

Im Ausführungsbeispiel ist das Stromverteilsystem 12 segmentiert. Es umfasst demnach mehrere Segmente S1, S2, S3.

Stellen, an welchen elektrische Energie von einem der Einspeisesysteme 14 in das Stromnetz 10 gelangt, werden auch hier als Einspeisepunkte 18 bezeichnet.

Im Ausführungsbeispiel ist das Stromverteilsystem 12 durch die Einspeisepunkte 18 segmentiert.

Ein Segment S1, S2, S3 ist dabei ein Bereich des Stromverteilsystems 12, der vorzugsweise trennbar mit anderen Bereichen des Stromverteilsystems 12, insbesondere anderen Segmenten S1, S2, S3, über einen Einspeisepunkt verbunden ist.

Wie in Figur 2 gezeigt, können an einem Einspeisepunkt 18 auch zwei oder mehr Einspeisesysteme 14 angeschlossen sein.

Darüber hinaus umfasst das Stromnetz 10 mehrere Stromerfassungsvorrichtungen 20 sowie Stromregulierungsvorrichtungen 22.

Im ersten Ausführungsbeispiel bilden jeweils eine Stromerfassungsvorrichtung 20 und eine Stromregulierungsvorrichtung 22 ein gemeinsames Bauteil, nämlich eine Sicherung F1a, F1b, F1c, F2a, F2b, F3a.

Die Sicherungen F1a, F1b, F1c, F2a, F2b, F3a können beispielsweise Schmelzsicherungen, elektronische Sicherungen oder (elektromechanische) Leitungsschutzschalter sein. Je nach Sicherungstyp werden die Stromflüsse auf unterschiedliche Art erfasst, insbesondere anhand einer Erwärmung eines Sicherheitsdrahtes und/oder eines Bimetallstreifens, und/oder anhand eines strominduzierten Magnetfeldes. Selbstverständlich sind auch andere Arten von Sicherungen denkbar.

Wie in Figur 2 gezeigt, ist das Segment S1 und das Segment S2 über die Sicherungen F1c und F2a trennbar miteinander verbunden.

Das Segment S2 und das Segment S3 sind über die Sicherungen F2b und F3a trennbar miteinander verbunden.

Die Verbindung zweier Segmente S1, S2, S3 erfolgt dabei jeweils an einem Einspeisepunkt 18, über den beide Segmente S1, S2, S3 mit Strom versorgt sind. Insofern kann ein Einspeisepunkt 18 zwei Segmenten S1, S2, S3 zugeordnet sein, wie dies beispielsweise für die Windkraftanlage in Figur 2 gezeigt ist, die dem ersten Segment S1 und dem zweiten Segment S2 zugeordnet ist.

Jedem der Segmente S1, S2, S3 ist mindestens ein Einspeisepunkt 18 zugeordnet, mit dem es trennbar über eine der Sicherungen F1a, F1b, F1c, F2a, F2b, F3a unmittelbar verbunden ist.

Selbstverständlich können einem Segment S1, S2, S3 auch mehrere Einspeisepunkte 18 zugeordnet sein. Dies ist beispielsweise in Figur 2 anhand von Segment S1 gezeigt, welchem drei Einspeisepunkte 18 zugeordnet sind, denen drei Sicherungen F1a, F1b, F1c zugeordnet sind.

Über die Sicherungen F1c und F2a können an dem zwischen den Segmenten S1 und S2 liegenden Einspeisepunkt 18 in das Stromverteilsystem 12 in unterschiedliche Richtungen fließende Ströme erfasst werden.

Über die Sicherung F1c kann der in das erste Segment S1 fließende Strom und über die Sicherung F2a der in das zweite Segment S2 fließende Strom erfasst werden.

Die Sicherungen F1c und F2a sind dazu ausgebildet und eingerichtet, Ströme im Stromverteilsystem 12 zu regulieren, wenn zumindest einer der von ihnen erfassten Ströme einen vorgegebenen Schwellenwert übersteigt.

Das Regulieren kann im einfachsten Falle durch ein Auslösen der betreffenden Sicherung F1c, F2a, bei welcher der Schwellwert überschritten wird, erfolgen, also einem Öffnen der entsprechenden Sicherung F1c, F2a.

Für die Sicherungen F2b und F3a gilt dasselbe. Auch diese Sicherungen können am Einspeisepunkt 18 zwischen den Segmenten S2 und S3 in das Stromverteilsystem 12 in unterschiedliche Richtungen fließende Ströme erfassen und im Bedarfsfall regulieren.

Grundsätzlich kann das Stromnetz 10 so vor einer Überlast geschützt werden.

Hierbei ist zu beachten, dass die maximale Stromtragfähigkeit der einzelnen Segmente S1, S2, S3 nicht überschritten werden darf.

Im Ausführungsbeispiel sind das Segment S2 und die Sicherungen F2a und F2b jeweils auf die maximale Stromtragfähigkeit des Stromverteilsystems 12 ausgelegt. Beträgt die maximale Stromtragfähigkeit beispielsweise 100 A, so sind die Sicherungen F2a und F2b jeweils auf 100 A ausgelegte Sicherungen. Da das Segment S2 lediglich über die beiden Sicherungen F2a und F2b gespeist wird, die an gegenüberliegenden Seiten angeordnet sind, ist sichergestellt, dass es zu keiner Überlastung des Segmentes S2 kommen kann.

Anders verhält es sich bei Segment S1. Dieses wird, wie in Figur 2 gezeigt, über drei Einspeisepunkte 18 gespeist. Um eine Überlastung des Segmentes S1 sicher zu vermeiden, sind die unmittelbar an S1 angrenzenden Sicherungen F1a, F1b und F1c so dimensioniert, dass die Summe ihrer Abschaltströme der maximalen Stromtragfähigkeit des Segments S1 entspricht. So wird sichergestellt, dass es zu keiner Überlastung kommen kann. Bei einer maximalen Stromtragfähigkeit des Segments S1 von 100 A können die Sicherungen F1a, F1b und F1c beispielsweise jeweils 33 A Sicherungen sein.

Vorteilhaft an der in Figur 2 gezeigten Ausgestaltung ist, dass die Segmente S1, S2, S3 des Stromverteilsystems 12 bedarfsgerecht dimensioniert werden können. Hiermit ist gemeint, dass die Stromtragfähigkeit einzelner Segmente S1, S2, S3 unterschiedlich sein kann. Beispielsweise kann das Segment S3 eine geringere Stromtragfähigkeit aufweisen als das Segment S1, da weniger Verbraucher 16 angeschlossen sind und somit ein geringerer Strom durch das betreffende Segment S3 übertragen werden muss.

Nachteilig an der Art der Auslegung ist, dass eine Überdimensionierung des Systems in vielen Fällen notwendig ist, um sicherzustellen, dass keine Überlast in einem der Segmente S1, S2, S3 auftreten kann.

Eine weitere Problematik der in Figur 2 gezeigten Ausführungsform ist, dass im Überlastfall Verbindungen zwischen den Segmenten S1, S2, S3 voneinander getrennt werden. Dadurch kommt es zu einer Umverteilung der Stromflüsse im Stromverteilsystem 12, was wiederum zu einer Überlastung weiterer Segmente S1, S2, S3 führen und somit eine Kettenreaktion auslösen kann.

Ferner kann es nach dem Abschalten dazu kommen, dass einzelne Segmente S1, S2, S3 autonom laufen. Das Wiederverbinden mit dem übrigen Stromverteilsystem 12 kann sich als schwierig erweisen.

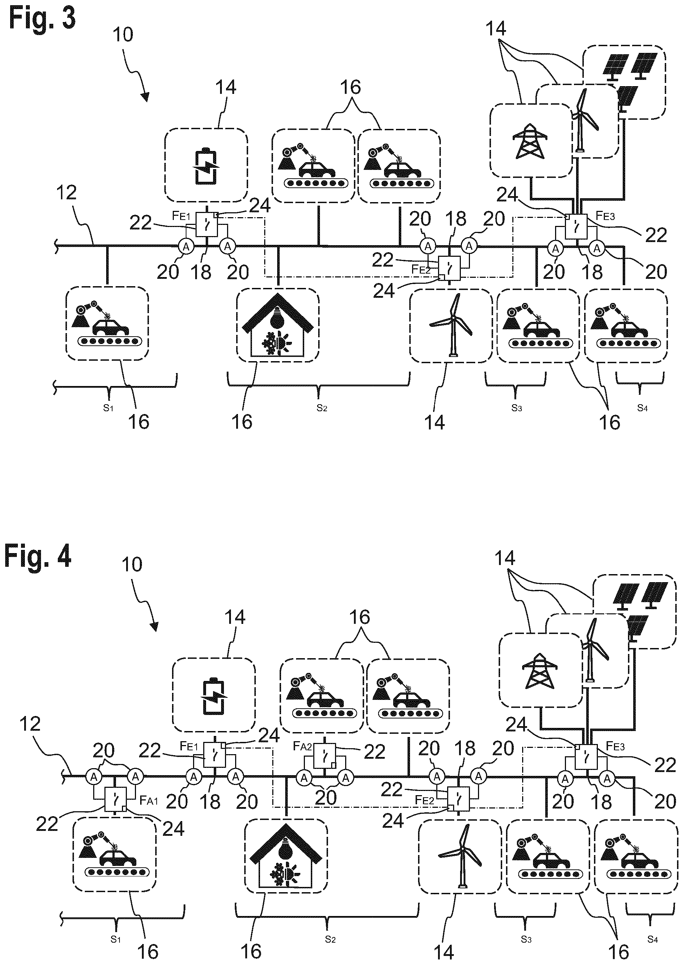

Figur 3 zeigt eine schematische Darstellung einer zweiten Ausführungsform eines erfindungsgemäßen Stromnetzes 10, in welchem die oben benannten Nachteile behoben sind.

Das zweite Ausführungsbeispiel entspricht im Wesentlichen der zuvor beschriebenen Ausführungsform, sodass lediglich auf Unterschiede eingegangen wird. Auf die obigen Ausführungen wird verwiesen.

In der zweiten Ausführungsform wird zum Schutz vor Überlast nicht das Stromverteilsystem 12 unterbrochen, sondern die Verbindung zu den Einspeisesystemen 14, insbesondere den Erzeugern und/oder Speichern.

Zu diesem Zweck sind an jedem der Einspeisepunkte 18 des Stromverteilsystems 12 Stromerfassungsvorrichtungen 20 vorgesehen, die den Stromfluss in zwei unterschiedliche vom Einspeisepunkt 18 abgehende Richtungen messen.

Insbesondere können die Stromerfassungsvorrichtungen 20, wie in der Figur 3 gezeigt, direkt im Stromverteilsystem 12 angeordnet sein, also nicht in der Zuleitung. Dies hat den Vorteil, dass auch im Falle einer Abtrennung oder Abschaltung der Zuleitung weiterhin der Stromfluss im Stromverteilsystem 12 überwacht werden kann.

An jedem der Einspeisepunkte 18 des Stromverteilsystems 12 ist jeweils eine Stromregulierungsvorrichtung 22 vorgesehen, beispielsweise ein Sicherungsschalter FE1, FE2, FE3. Die Sicherungsschalter FE1, FE2, FE3 bilden im Ausführungsbeispiel einen zentralen Bestandteil des erfindungsgemäßen Stromnetzes 10 und sind jeweils mit den Stromerfassungsvorrichtungen 20 des betreffenden Einspeisepunktes 18 verbunden.

Sollte der Stromfluss das Stromverteilsystem 12 und/oder eines der Segmente S1, S2, S3, S4 überlasten, wird dies über die Stromerfassungsvorrichtungen 20 erfasst. Die Auslegung der Segmente S1, S2, S3, S4 sowie Stromregulierungsvorrichtungen 22 entspricht dabei wieder den im ersten Ausführungsbeispiel beschriebenen Regeln.

Im Falle, dass eine Überlastung droht, kann eine der Stromregulierungsvorrichtungen 22 eingreifen und eines oder mehrere der Einspeisesysteme 14 vom Stromverteilsystem 12 bzw. dem betreffenden Einspeisepunkt 18 trennen.

Alternativ oder zusätzlich können die Stromregulierungsvorrichtungen 22 dazu ausgebildet und eingerichtet sein, Ströme im Stromverteilsystem 12 dadurch zu regulieren, dass eine Leistung eines mit einem Einspeisepunkt 18 verbundenen Einspeisesystems 14 geregelt wird (beispielsweise durch Drosselung der Leistung eines Erzeugers).

Im Ausführungsbeispiel weisen die Stromregulierungsvorrichtungen 22 jeweils eine Kommunikationseinheit 24 auf, über welche sie miteinander kommunizieren können.

Die Kommunikation kann über Funk, eine Datenleitung oder über das Stromverteilsystem 12 selbst erfolgen, beispielsweise indem ein analoges oder digitales Signal über die betreffenden Stromleitungen und/oder Stromschienen übertragen wird.

Mittels der Kommunikationseinheiten 24 können beispielsweise von den Stromerfassungsvorrichtungen 20 erfasste Daten über den Stromfluss in eines der Segmente S1, S2, S3, S4 auf einer Segmentseite an eine Stromregulierungsvorrichtung 22 auf einer anderen Segmentseite übertragen werden.

Beispielsweise kann eine Datenübertragung von Sicherungsschalter FE1 zu Sicherungsschalter FE2 erfolgen, die beide an gegenüberliegenden Enden des Segments S2 angeordnet sind.

So können Stromflüsse im Stromverteilsystem 12 besser überwacht und die zur Verfügung stehenden Ressourcen besser ausgenutzt werden. Entsprechend kann die notwendige Überdimensionierung des Stromverteilsystems 12 verringert werden, ohne das Risiko für eine Überlast zu erhöhen.

Figur 4 zeigt eine schematische Darstellung einer dritten Ausführungsform eines erfindungsgemäßen Stromnetzes 10.

Diese entspricht im Wesentlichen der zuvor beschriebenen zweiten Ausführungsform, sodass lediglich auf Unterschiede eingegangen wird. Auf die obigen Ausführungen wird insoweit verwiesen.

In der dritten Ausführungsform sind zusätzliche Stromregulierungsvorrichtungen 22 vorgesehen, welche zwischen dem Stromverteilsystem 12 und bestimmten Verbrauchern 16 angeordnet sind. Mit anderen Worten sind bestimmte Verbraucher 16 im Abgang genauso abgesichert wie die Einspeisesysteme 14.

Zu diesem Zweck sind an den jeweiligen Abgängen Stromerfassungsvorrichtungen 20 vorgesehen, die den Stromfluss im Stromverteilsystem 12 in zwei unterschiedlichen zum Abgang hingehenden Richtungen messen.

Ist das Stromnetz 10 und/oder eines der Segmente S1, S2, S3, S4 überlastet, können einer oder mehrere der Verbraucher 16 über die jeweilige Stromregulierungsvorrichtung 22 vom Stromverteilsystem 12 getrennt werden. Dieses kann durch hartes Abschalten geschehen. Alternativ kann auf die Überlastung mit einer Anforderung an das System reagiert werden, den Energiebedarf zu senken.

Zum Schutz vor einem Black Out ist es nicht notwendig alle Verbraucher 16 in dieser Form abzusichern. Je nach Anwendung kann es ausreichen, einige Großverbraucher abzusichern. So ist in Figur 4 gezeigt, dass mehrere elektrische Verbraucher 16 vorgesehen sind, von denen jedoch nur eine Teilmenge über Stromregulierungsvorrichtungen 22 abgesichert ist.

Auch müssen insbesondere für kleinere Erzeuger bzw. rückspeisende Systeme nicht zwangsläufig die oben beschriebenen Absicherungen eingesetzt werden. Bei der Auslegung und Einstellung des Stromnetzes 10 kann es auch ausreichen, diese Erzeuger bzw. Systeme unter Vorhalten einer Reserve zu integrieren.

Im Ausführungsbeispiel weisen auch die an den jeweiligen Abgängen vorgesehenen Stromregulierungsvorrichtungen 22 Kommunikationseinheiten 24 auf, über welche sie mit den anderen Stromregulierungsvorrichtungen 22 kommunizieren können. Dadurch wird die Kontrolle über die Stromflüsse weiter verbessert, was eine schlankere Auslegung des Stromverteilsystems 12 ermöglicht.

Im dritten Ausführungsbeispiel sind die Einspeisepunkte 18 im Stromverteilsystem 12 so angeordnet, dass Strom jeweils von jedem der Einspeisepunkte 18 in unterschiedliche Richtungen in das Stromverteilsystem 12 fließen kann. Dadurch wird der vom jeweiligen Einspeisesystem 14 kommende Stromfluss aufgeteilt, was wiederum die Last auf die einzelnen Leitungen des Stromverteilsystems 12 reduziert.

Wie in Figur 4 gezeigt, gehen durch diese Anordnung von jedem der Einspeisepunkte 18 drei Leitungen ab. Es ist jedoch nicht notwendig, den Strom in allen drei Leitungen separat zu erfassen, um eine umfassende Kontrolle über die Stromflüsse zu erlangen. Wird der Strom in zwei der Leitungen mittels der Stromerfassungsvorrichtungen 20 gemessen, kann der Strom in der dritten Leitung nach der Kirchhoffschen Knotenregel errechnet werden.

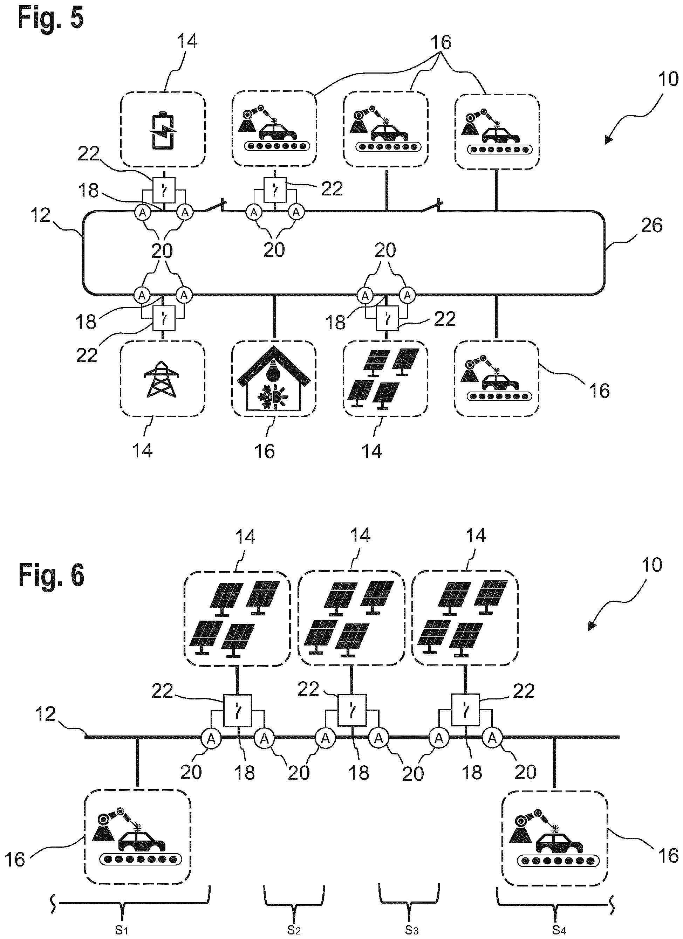

Figur 5 zeigt eine schematische Darstellung einer vierten Ausführungsform eines erfindungsgemäßen Stromnetzes 10.

Auch diese entspricht im Wesentlichen den zuvor beschriebenen Ausführungsformen, sodass lediglich auf Unterschiede eingegangen wird. Auf die obigen Ausführungen wird insoweit verwiesen.

Bei der in Figur 5 gezeigten Ausführungsform ist das Stromverteilsystem 12 als Ringstruktur 26 ausgebildet.

Ein wesentlicher Vorteil einer solchen Ringstruktur 26 ist, dass sie in mehrere Segmente (nicht gezeigt) eingeteilt werden kann. Bei einer Wartung kann ein einzelnes Segment dann vergleichsweise einfach von den übrigen Segmenten abgetrennt und spannungsfrei geschaltet werden. Die übrigen Segmente bleiben dabei miteinander verbunden, sodass diese von der Abschaltung nicht beeinträchtigt werden.

Vorzugsweise ist die Ringstruktur 26 so ausgebildet, dass sich der Stromfluss an einem Einspeisepunkt 18 zumindest annähernd gleichmäßig in beide Richtungen der Ringstruktur 26 aufteilt.

Bei mehreren Einspeisesystemen 14 kann insbesondere vorgesehen sein, dass diese gleichmäßig über die Ringstruktur 26 verteilt sind. Somit wird das Stromverteilsystem 12 optimal ausgenutzt und die notwendige Überdimensionierung auf ein Minimum reduziert.

Auch bei der Ringstruktur 26 sind an jedem der Einspeisepunkte 18 Stromerfassungsvorrichtungen 20 vorgesehen, die den Stromfluss in zwei unterschiedliche vom Einspeisepunkt 18 abgehende Richtungen messen.

Darüber hinaus ist an jedem der Einspeisepunkte 18 jeweils eine Stromregulierungsvorrichtung 22 vorgesehen, welche mit den jeweiligen Stromerfassungsvorrichtungen 20 des betreffenden Einspeisepunktes 18 verbunden ist.

Wie in den vorhergehenden Ausführungsbeispielen beschrieben, kann, wenn der Stromfluss das Stromverteilsystem 12 zu überlasten droht, eine Regulierung und/oder Abschaltung einzelner Einspeisesysteme 14 erfolgen.

Auch in diesem Ausführungsbeispiel sind das Stromverteilsystem 12 und die Stromregulierungsvorrichtungen 22 so ausgelegt, dass eine Summe der Abschaltströme der Stromregulierungsvorrichtungen 22 geringer ist, als die Stromtragfähigkeit des Stromverteilsystems 12 bzw. eines Segments.

Dadurch wird sichergestellt, dass es zu keiner Überlastung kommen kann.

Grundsätzlich ist also sichergestellt, dass eine Energieverteilung in einem Micro-Grid sichergestellt ist, ohne dass es zu einer Überlastung des Stromverteilsystems 12 kommt. Eine ansonsten notwendige Überdimensionierung kann verhindert oder zumindest auf ein Minimum reduziert werden. Mit anderen Worten wird es ermöglicht, die Leistung des Stromverteilsystems 12 optimal ausnutzen zu können, wobei gleichzeitig ein sicherer Betrieb des Systems sichergestellt ist

Figur 6 zeigt eine schematische Darstellung einer fünften Ausführungsform eines erfindungsgemäßen Stromnetzes 10.

Auch diese entspricht im Wesentlichen den zuvor beschriebenen Ausführungsformen, sodass lediglich auf Unterschiede eingegangen wird. Auf die obigen Ausführungen wird insoweit verwiesen.

In Figur 6 bilden die Einspeisepunkte 18 die Grenzen der Segmente S1, S2, S3, S4. Jedes Segment S1, S2, S3, S4 wird von mindestens einer Seite gespeist.

Der Stromfluss in bzw. aus den Segmenten S1, S2, S3, S4 wird mittels Stromerfassungsvorrichtungen 20 überwacht, die an den jeweiligen Segmentenden angeordnet sind.

Besonders an der Ausführungsform ist, dass mehrere Einspeisesysteme 14 nebeneinander angeordnet sind. So gibt es in diesem Beispiel Segmente 2, 3, denen zwar ein Einspeisepunkt 18 bzw. Einspeisesystem 14, jedoch kein Verbraucher 16 zugeordnet ist.

### Bezugszeichenliste

| Bezugszeichen | Benennung |
|---|---|
| 9 | Konventionelles Stromnetz |
| 10 | Stromnetz |
| 12 | Stromverteilsystem |
| 14 | Einspeisesystem |
| 16 | Verbraucher |
| 18 | Einspeisepunkt |
| 20 | Stromerfassungsvorrichtung |
| 22 | Stromregulierungsvorrichtung |
| 24 | Kommunikationseinheit |
| 26 | Ringstruktur |
| S1 | Erstes Segment |
| S2 | Zweites Segment |
| S3 | Drittes Segment |

## Patentansprüche

1. Stromnetz für ein dezentrales Energiesystem, umfassend zumindest ein Stromverteilsystem (12) mit zumindest zwei Einspeisepunkten (18), zumindest eine Stromerfassungsvorrichtung (20), und zumindest eine Stromregulierungsvorrichtung (22), wobei die Stromerfassungsvorrichtung (20) dazu ausgebildet und eingerichtet ist, an den Einspeisepunkten (18) jeweils in das Stromverteilsystem (12) in unterschiedliche Richtungen fließende Ströme zu erfassen und wobei die Stromregulierungsvorrichtung (22) dazu ausgebildet und eingerichtet ist, Ströme im Stromverteilsystem (12) zu regulieren, wenn zumindest einer der von der Stromerfassungsvorrichtung (20) erfassten Ströme einen vorgegebenen Schwellenwert übersteigt.

2. Stromnetz gemäß Anspruch 1, wobei die Stromerfassungsvorrichtung (20) dazu ausgebildet und eingerichtet ist, Stromflüsse elektronisch und/oder anhand einer Erwärmung einer Komponente des Stromverteilsystems (12), insbesondere eines Sicherheitsdrahtes und/oder eines Bimetallstreifens, und/oder anhand eines strominduzierten Magnetfeldes zu erfassen.

3. Stromnetz gemäß Anspruch 1 oder 2, wobei die Stromregulierungsvorrichtung (22) dazu ausgebildet und eingerichtet ist, Ströme im Stromverteilsystem (12) dadurch zu regulieren, dass eine Leistung eines mit einem Einspeisepunkt (18) verbundenen Einspeisesystems (14) geregelt wird, das Einspeisesystem (14) abgeschaltet wird und/oder das Einspeisesystem (14) vom Einspeisepunkt (18) getrennt wird.

4. Stromnetz gemäß einem der Ansprüche 1 bis 3, wobei die Stromregulierungsvorrichtung (22) dazu ausgebildet und eingerichtet ist, Ströme im Stromverteilsystem (12) dadurch zu regulieren, dass das Stromverteilsystem (12) in zumindest eine Richtung unterbrochen wird und/oder am Stromverteilsystem (12) angeschlossene Verbraucher (16) geregelt, abgeschaltet oder vom Stromverteilsystem (12) getrennt werden.

5. Stromnetz gemäß einem der vorhergehenden Ansprüche, wobei das Stromverteilsystem (12) dazu ausgebildet und eingerichtet ist, mit Gleichstrom betrieben zu werden.

6. Stromnetz gemäß einem der vorhergehenden Ansprüche mit zumindest zwei Stromerfassungsvorrichtungen (20) und/oder Stromregulierungsvorrichtungen (22), die jeweils eine Kommunikationseinheit (24) haben, über welche die Stromerfassungsvorrichtungen (20) und/oder Stromregulierungsvorrichtungen (22) miteinander kommunizieren.

7. Stromnetz gemäß einem der vorhergehenden Ansprüche, wobei das Stromverteilsystem (12) mehrere Segmente (S1, S2, S3, S4) umfasst, die jeweils durch Stromregulierungsvorrichtungen (22) trennbar miteinander und/oder trennbar mit zumindest einem Einspeisesystem (14) verbunden sind.

8. Stromnetz gemäß Anspruch 7, wobei eine Verbindung zweier Segmente (S1, S2, S3, S4) an einem Einspeisepunkt (18) erfolgt, über den beide Segmente (S1, S2, S3, S4) mit Strom versorgt sind.

9. Stromnetz gemäß Anspruch 7 oder 8, wobei jedes Segment (S1, S2, S3, S4) mit zumindest einem Einspeisesystem (14) verbunden ist und/oder wobei jedem Segment (S1, S2, S3, S4) zumindest ein Einspeisepunkt (18) zugeordnet ist.

10. Stromnetz gemäß einem der vorhergehenden Ansprüche, wobei mehrere Einspeisepunkte (18) im Stromverteilsystem (12) vorgesehen sind, die jeweils über eine zugeordnete Stromregulierungsvorrichtung (22) abgesichert sind.

11. Stromnetz gemäß einem der vorhergehenden Ansprüche, wobei mehrere elektrische Verbraucher (16) im Stromverteilsystem (12) vorgesehen sind, von denen nur eine Teilmenge über Stromregulierungsvorrichtungen (22) abgesichert ist.

12. Stromnetz gemäß einem der vorhergehenden Ansprüche, wobei an zumindest einem der Einspeisepunkte (18) zwei oder mehr Einspeisesysteme (14) angeschlossen sind.

13. Stromnetz gemäß einem der vorhergehenden Ansprüche, wobei alle Einspeisepunkte (18) im Stromverteilsystem (12) so angeordnet sind, dass Strom von den Einspeisepunkten (18) jeweils in unterschiedliche Richtungen in das Stromverteilsystem (12) fließen kann.

14. Stromnetz gemäß einem der vorhergehenden Ansprüche, wobei das Stromverteilsystem (12) als Ringstruktur (26) ausgebildet ist.
